# EUROPEAN PATENT APPLICATION

(11) **EP 4 284 000 A1**
(43) Date of publication of application: **29.11.2023**
(21) Application number: 23174785.8
(22) Date of filing: 23.05.2023
(51) Int. Cl.: H04N 21/2343, H04N 21/2381, H04N 21/63, H04N 21/6437, H04N 21/81, H04N 21/845, H04N 21/854

(54) **AN APPARATUS, A METHOD AND A COMPUTER PROGRAM FOR VOLUMETRIC VIDEO**

(30) Priority: 25.05.2022 FI 20225457
(71) Applicant: Nokia Technologies Oy, 02610 Espoo (FI)
(72) Inventor: KONDRAD, Lukasz, 80331 Munich (DE); ILOLA, Lauri Aleksi, 33610 Tampere (FI); HANNUKSELA, Miska Matias, 33610 Tampere (FI); KAMMACHI SREEDHAR, Kashyap, 33100 Tampere (FI); AKSU, Emre Baris, 33800 Tampere (FI)
(74) Representative: Berggren Oy

(57) **Abstract**

A method comprising: obtaining at least two media bitstreams or sub-bitstreams having at least one composition dependency; packetizing each media bitstream or sub-bitstream into a separate RTP session; generating a description indicating the at least one composition dependency between the RTP sessions of said at least two media bitstreams or sub-bitstreams; including, in at least a first RTP session, composition dependency information of the first RTP session towards one or more packets in the other RTP sessions; transmitting the description to a receiver; and transmitting the packets of the at least two RTP sessions and the composition dependency information to the receiver.

## Description

### TECHNICAL FIELD

The present invention relates to an apparatus, a method and a computer program for volumetric video coding.

### BACKGROUND

Visual volumetric video-based coding (V3C; defined in ISO/IEC DIS 23090-5) provides a generic syntax and mechanism for volumetric video coding. The generic syntax can be used by applications targeting volumetric content, such as point clouds, immersive video with depth, and mesh representations of volumetric frames. The purpose of the specification is to define how to decode and interpret the associated data (atlas data in ISO/IEC 23090-5) which tells a renderer how to interpret 2D frames for reconstructing volumetric frames.

A V3C content can be encoded into a V3C bitstream and transmitted over multiple RTP sessions. For example, each video V3C component, each atlas V3C component and a common atlas V3C component can have their own RTP session. V3C bitstream has an implicit dependency between the V3C components to properly decode and render the V3C object. For example, video V3C components are useless in composition (reconstructing) process if the corresponding atlas V3C component is missing. In case of MPEG immersive video (MIV), video V3C components and atlas V3C components are useless if the corresponding common atlas V3C component is missing. In RTP streaming applications, proper synchronization across RTP sessions can typically be obtained, e.g., via timestamps of the RTP packets.

However, in case of real-time transmission, a receiver should have sufficient information for ensuring that the packets across different RTP sessions create a valid combination and can be decoded and reconstructed together. Nevertheless, a problem may appear, for example, when the V3C components have different, and possibly non-constant, frame rates during the session, for example due to the camera movements in the capture system.

### SUMMARY

Now, an improved method and technical equipment implementing the method has been invented, by which the above problems are alleviated. Various aspects include a method, an apparatus and a computer readable medium comprising a computer program, or a signal stored therein, which are characterized by what is stated in the independent claims. Various details of the embodiments are disclosed in the dependent claims and in the corresponding images and description.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided an apparatus comprising means for obtaining at least two media bitstreams or sub-bitstreams having at least one composition dependency; means for packetizing each media bitstream or sub-bitstream into a separate RTP session; means for generating a description indicating the at least one composition dependency between the RTP sessions of said at least two media bitstreams or sub-bitstreams; means for including, in packets of at least a first RTP session, composition dependency information of the packets of the first RTP session towards one or more packets in the other RTP sessions; means for transmitting the description to a receiver; and means for transmitting the packets of the at least two RTP sessions to the receiver.

According to an embodiment, said description is a Session Description Protocol (SDP) file.

According to an embodiment, the apparatus comprises means for carrying out a signalling of the composition dependency between packets of the at least two RTP sessions by at least one syntax element included in media level of the SDP file.

According to an embodiment, the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

According to an embodiment, the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

According to an embodiment, at least one RTP session has the composition dependency with a plurality of other RTP sessions.

According to an embodiment, said means for packetizing is configured to, in response to at least a first RTP session having said composition dependency with a second RTP session comprises a bitstream or a sub-bitstream having a lower transmission frequency of the RTP packets than a bitstream or a sub-bitstream of the second RTP session, duplicate the RTP packets of the bitstream or the sub-bitstream of said at least first RTP session in the bitstream or the sub-bitstream of said second RTP session in corresponding locations lacking an RTP packet.

According to an embodiment, each of the at least two RTP sessions comprise a media sub-bitstream associated with a visual volumetric video-based coding (V3C) bitstream, wherein at least one of the media sub-bitstreams is an atlas sub-bitstream.

According to a second aspect, there is provided a method comprising: obtaining at least two media bitstreams or sub-bitstreams having at least one composition dependency; packetizing each media bitstream or sub-bitstream into a separate RTP session; generating a description indicating the at least one composition dependency between the RTP sessions of said at least two media bitstreams or sub-bitstreams; including, in packets of at least a first RTP session, composition dependency information of the packets of the first RTP session towards one or more packets in the other RTP sessions; transmitting the description to a receiver; and transmitting the packets of the at least two RTP sessions to the receiver.

According to a third aspect, there is provided an apparatus comprising means for receiving a description indicating at least two RTP sessions, each comprising a media bitstream or sub-bitstream, and at least one composition dependency between the RTP sessions; means for receiving packets of the at least two RTP sessions, wherein at least a first RTP session comprises composition dependency information of the packets of the first RTP session with one or more packets in the other RTP sessions; means for determining, based on the composition dependency information of the first RTP session, if any of the one or more packets in the other RTP sessions having the composition dependency with a packet of the first RTP session is missing from the other RTP sessions; means for providing the packets of the at least two RTP sessions to respective decoders when all packets having the composition dependency between the RTP sessions, as indicated by the description, have been received; and means for controlling the respective decoders to reconstruct the packets of the at least two RTP sessions, wherein the missing packets, if any, are addressed upon reconstructing.

According to an embodiment, said description is a Session Description Protocol (SDP) file.

According to an embodiment, the apparatus comprises means for determining a signalling of the composition dependency between packets of the at least two RTP sessions from at least one syntax element included in media level of the SDP file.

According to an embodiment, the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

According to an embodiment, the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

According to an embodiment, each of the at least two RTP sessions comprise a media sub-bitstream associated with a visual volumetric video-based coding (V3C) bitstream, wherein at least one of the media sub-bitstreams is an atlas sub-bitstream.

According to an embodiment, the apparatus comprises means for re-rendering, responsive to determining that at least one packet of an RTP session having the composition dependency with at least one packet of the atlas sub-bitstream is missing, a frame comprised by a previous packet of the atlas sub-bitstream; and means for notifying a sender that said at least one packet is missing.

According to an embodiment, at least one RTP session having the composition dependency with RTP session comprising the atlas sub-bitstream has a lower transmission frequency of the RTP packets than RTP session comprising the atlas sub-bitstream, wherein the apparatus comprises means for duplicating the RTP packets of said at least one RTP session in the atlas sub-bitstream in corresponding locations lacking an RTP packet.

A method according to a fourth aspect comprises: receiving a description indicating at least two RTP sessions, each comprising a media bitstream or sub-bitstream, and at least one composition dependency between the RTP sessions; receiving packets of the at least two RTP sessions, wherein at least a first RTP session comprises composition dependency information of the packets of the first RTP session with one or more packets in the other RTP sessions; determining, based on the composition dependency information of the first RTP session, if any of the one or more packets in the other RTP sessions having the composition dependency with a packet of the first RTP session is missing from the other RTP sessions; providing the packets of the at least two RTP sessions to respective decoders when all packets having the composition dependency between the RTP sessions, as indicated by the description, have been received; and controlling the respective decoders to reconstruct the packets of the at least two RTP sessions, wherein the missing packets, if any, are addressed upon reconstructing.

Computer readable storage media according to further aspects comprise code for use by an apparatus, which when executed by a processor, causes the apparatus to perform the above methods.

### BRIEF DESCRIPTION OF THE DRAWINGS

For a more complete understanding of the example embodiments, reference is now made to the following descriptions taken in connection with the accompanying drawings in which:
Figs. 1a and 1b show an encoder and decoder for encoding and decoding 2D pictures;
Figs. 2a and 2b show a compression and a decompression process for 3D volumetric video;
Fig. 3 shows an example of a VC3 bitstream;
Fig. 4 shows a structure of extension header data of an RTP packet header;
Fig. 5 shows an example of a V3C object transmitted over four RTP sessions;
Fig. 6 shows a flow chart for an encoding method according to an embodiment;
Fig. 7 shows a flow chart for decoding method according to an embodiment;
Fig. 8 shows an example of a V3C object transmitted over four RTP sessions provided with header extensions according to an embodiment; and
Fig. 9 shows an example of a V3C object transmitted over four RTP sessions provided with header extensions according to another embodiment.

### DETAILED DESCRIPTON OF SOME EXAMPLE EMBODIMENTS

A video codec comprises an encoder that transforms the input video into a compressed representation suited for storage/transmission, and a decoder that can uncompress the compressed video representation back into a viewable form. An encoder may discard some information in the original video sequence in order to represent the video in a more compact form (i.e. at lower bitrate).

Volumetric video may be captured using one or more three-dimensional (3D) cameras. When multiple cameras are in use, the captured footage is synchronized so that the cameras provide different viewpoints to the same world. In contrast to traditional 2D/3D video, volumetric video describes a 3D model of the world where the viewer is free to move and observer different parts of the world.

Volumetric video enables the viewer to move in six degrees of freedom (6DOF): in contrast to common 360° video, where the user has from 2 to 3 degrees of freedom (yaw, pitch, and possibly roll), a volumetric video represents a 3D volume of space rather than a flat image plane. Volumetric video frames contain a large amount of data because they model the contents of a 3D volume instead of just a two-dimensional (2D) plane. However, only a relatively small part of the volume changes over time. Therefore, it may be possible to reduce the total amount of data by only coding information about an initial state and changes which may occur between frames. Volumetric video can be rendered from synthetic 3D animations, reconstructed from multi-view video using 3D reconstruction techniques such as structure from motion, or captured with a combination of cameras and depth sensors such as LiDAR (Light Detection and Ranging), for example.

Volumetric video data represents a three-dimensional scene or object, and thus such data can be viewed from any viewpoint. Volumetric video data can be used as an input for augmented reality (AR), virtual reality (VR) and mixed reality (MR) applications. Such data describes geometry (shape, size, position in 3D-space) and respective attributes (e.g. color, opacity, reflectance, ...), together with any possible temporal changes of the geometry and attributes at given time instances (e.g. frames in 2D video). Volumetric video is either generated from 3D models, i.e. computer-generated imagery (CGI), or captured from real-world scenes using a variety of capture solutions, e.g. a multi-camera, a laser scan, a combination of video and dedicated depths sensors, etc. Also, a combination of CGI and real-world data is possible. Examples of representation formats for such volumetric data are triangle meshes, point clouds, or voxel. Temporal information about the scene can be included in the form of individual capture instances, i.e. "frames" in 2D video, or other means, e.g. position of an object as a function of time.

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense voxel arrays have been used to represent volumetric medical data. In 3D graphics, polygonal meshes are extensively used. Point clouds on the other hand are well suited for applications, such as capturing real world 3D scenes where the topology is not necessarily a 2D manifold. Another way to represent 3D data is coding this 3D data as a set of texture and depth map as is the case in the multi-view plus depth. Closely related to the techniques used in multi-view plus depth is the use of elevation maps, and multi-level surface maps.

In 3D point clouds, each point of each 3D surface is described as a 3D point with color and/or other attribute information such as surface normal or material reflectance. Point cloud is a set of data points in a coordinate system, for example in a three-dimensional coordinate system being defined by X, Y, and Z coordinates. The points may represent an external surface of an object in the screen space, e.g. in a three-dimensional space.

In dense point clouds or voxel arrays, the reconstructed 3D scene may contain tens or even hundreds of millions of points. If such representations are to be stored or interchanged between entities, then efficient compression of the presentations becomes fundamental. Standard volumetric video representation formats, such as point clouds, meshes, voxel, suffer from poor temporal compression performance. Identifying correspondences for motion-compensation in 3D-space is an ill-defined problem, as both, geometry and respective attributes may change. For example, temporal successive "frames" do not necessarily have the same number of meshes, points or voxel. Therefore, compression of dynamic 3D scenes is inefficient. 2D-video based approaches for compressing volumetric data, i.e. multiview with depth, have much better compression efficiency, but rarely cover the full scene. Therefore, they provide only limited 6DOF capabilities.

Instead of the above-mentioned approach, a 3D scene, represented as meshes, points, and/or voxel, can be projected onto one, or more, geometries. These geometries may be "unfolded" or packed onto 2D planes (two planes per geometry: one for texture, one for depth), which are then encoded using standard 2D video compression technologies. Relevant projection geometry information may be transmitted alongside the encoded video files to the decoder. The decoder decodes the video and performs the inverse projection to regenerate the 3D scene in any desired representation format (not necessarily the starting format).

Projecting volumetric models onto 2D planes allows for using standard 2D video coding tools with highly efficient temporal compression. Thus, coding efficiency can be increased greatly. Using geometry-projections instead of 2D-video based approaches based on multiview and depth, provides a better coverage of the scene (or object). Thus, 6DOF capabilities are improved. Using several geometries for individual objects improves the coverage of the scene further. Furthermore, standard video encoding hardware can be utilized for real-time compression/decompression of the projected planes. The projection and the reverse projection steps are of low complexity.

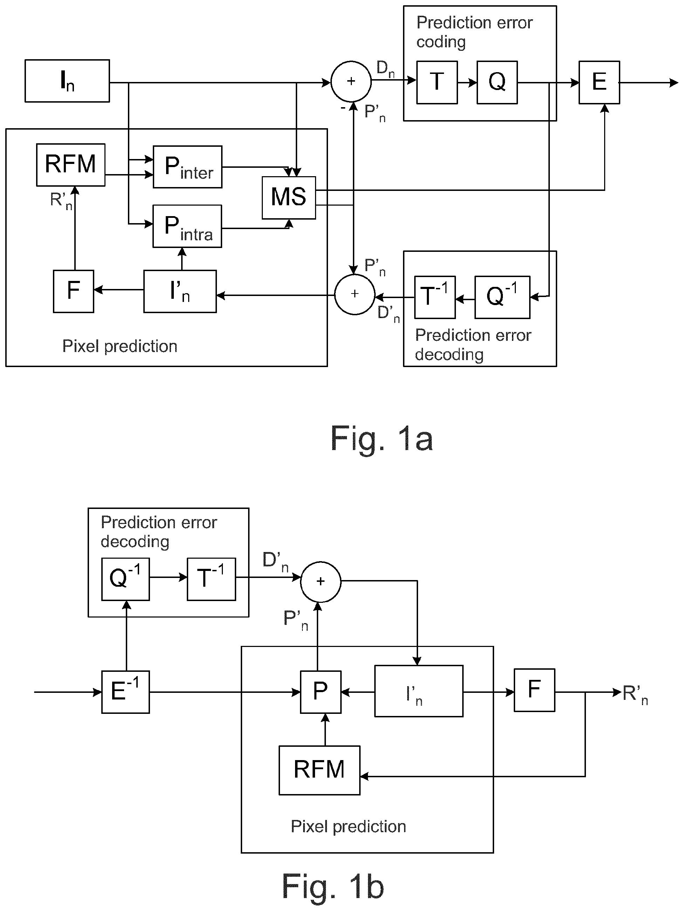

Figs. 1a and 1b show an encoder and decoder for encoding and decoding the 2D texture pictures, geometry pictures and/or auxiliary pictures. A video codec consists of an encoder that transforms an input video into a compressed representation suited for storage/transmission and a decoder that can uncompress the compressed video representation back into a viewable form. Typically, the encoder discards and/or loses some information in the original video sequence in order to represent the video in a more compact form (that is, at lower bitrate). An example of an encoding process is illustrated in Figure 1a. Figure 1a illustrates an image to be encoded (Iⁿ); a predicted representation of an image block (P'ⁿ); a prediction error signal (Dⁿ); a reconstructed prediction error signal (D'ⁿ); a preliminary reconstructed image (I'ⁿ); a final reconstructed image (R'ⁿ); a transform (T) and inverse transform (T⁻¹); a quantization (Q) and inverse quantization (Q⁻¹); entropy encoding (E); a reference frame memory (RFM); inter prediction (Pᵢₙₜₑᵣ); intra prediction (Pᵢₙₜᵣₐ); mode selection (MS) and filtering (F).

An example of a decoding process is illustrated in Figure 1b. Figure 1b illustrates a predicted representation of an image block (P'ⁿ); a reconstructed prediction error signal (D'ⁿ); a preliminary reconstructed image (I'ⁿ); a final reconstructed image (R'ⁿ); an inverse transform (T⁻¹); an inverse quantization (Q⁻¹); an entropy decoding (E⁻¹); a reference frame memory (RFM); a prediction (either inter or intra) (P); and filtering (F).

Many hybrid video encoders encode the video information in two phases. Firstly pixel values in a certain picture area (or "block") are predicted for example by motion compensation means (finding and indicating an area in one of the previously coded video frames that corresponds closely to the block being coded) or by spatial means (using the pixel values around the block to be coded in a specified manner). Secondly the prediction error, i. e. the difference between the predicted block of pixels and the original block of pixels, is coded. This is typically done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate). Video codecs may also provide a transform skip mode, which the encoders may choose to use. In the transform skip mode, the prediction error is coded in a sample domain, for example by deriving a sample-wise difference value relative to certain adjacent samples and coding the sample-wise difference value with an entropy coder.

Many video encoders partition a picture into blocks along a block grid. For example, in the High Efficiency Video Coding (HEVC) standard, the following partitioning and definitions are used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples. A CU with the maximum allowed size may be named as LCU (largest coding unit) or coding tree unit (CTU) and the video picture is divided into non-overlapping LCUs.

In HEVC, a picture can be partitioned in tiles, which are rectangular and contain an integer number of LCUs. In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is a current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, the CUs have a specific scan order.

Entropy coding/decoding may be performed in many ways. For example, context-based coding/decoding may be applied, where in both the encoder and the decoder modify the context state of a coding parameter based on previously coded/decoded coding parameters. Context-based coding may for example be context adaptive binary arithmetic coding (CABAC) or context-adaptive variable length coding (CAVLC) or any similar entropy coding. Entropy coding/decoding may alternatively or additionally be performed using a variable length coding scheme, such as Huffman coding/decoding or Exp-Golomb coding/decoding. Decoding of coding parameters from an entropy-coded bitstream or codewords may be referred to as parsing.

The phrase along the bitstream (e.g. indicating along the bitstream) may be defined to refer to out-of-band transmission, signaling, or storage in a manner that the out-of-band data is associated with the bitstream. The phrase decoding along the bitstream or alike may refer to decoding the referred out-of-band data (which may be obtained from out-of-band transmission, signaling, or storage) that is associated with the bitstream. For example, an indication along the bitstream may refer to metadata in a container file that encapsulates the bitstream.

A first texture picture may be encoded into a bitstream, and the first texture picture may comprise a first projection of texture data of a first source volume of a scene model onto a first projection surface. The scene model may comprise a number of further source volumes.

In the projection, data on the position of the originating geometry primitive may also be determined, and based on this determination, a geometry picture may be formed. This may happen for example so that depth data is determined for each or some of the texture pixels of the texture picture. Depth data is formed such that the distance from the originating geometry primitive such as a point to the projection surface is determined for the pixels. Such depth data may be represented as a depth picture, and similarly to the texture picture, such geometry picture (such as a depth picture) may be encoded and decoded with a video codec. This first geometry picture may be seen to represent a mapping of the first projection surface to the first source volume, and the decoder may use this information to determine the location of geometry primitives in the model to be reconstructed. In order to determine the position of the first source volume and/or the first projection surface and/or the first projection in the scene model, there may be first geometry information encoded into or along the bitstream. It is noted that encoding a geometry (or depth) picture into or along the bitstream with the texture picture is only optional and arbitrary for example in the cases where the distance of all texture pixels to the projection surface is the same or there is no change in said distance between a plurality of texture pictures. Thus, a geometry (or depth) picture may be encoded into or along the bitstream with the texture picture, for example, only when there is a change in the distance of texture pixels to the projection surface.

An attribute picture may be defined as a picture that comprises additional information related to an associated texture picture. An attribute picture may for example comprise surface normal, opacity, or reflectance information for a texture picture. A geometry picture may be regarded as one type of an attribute picture, although a geometry picture may be treated as its own picture type, separate from an attribute picture.

Texture picture(s) and the respective geometry picture(s), if any, and the respective attribute picture(s) may have the same or different chroma format.

Terms texture (component) image and texture (component) picture may be used interchangeably. Terms geometry (component) image and geometry (component) picture may be used interchangeably. A specific type of a geometry image is a depth image. Embodiments described in relation to a geometry (component) image equally apply to a depth (component) image, and embodiments described in relation to a depth (component) image equally apply to a geometry (component) image. Terms attribute image and attribute picture may be used interchangeably. A geometry picture and/or an attribute picture may be treated as an auxiliary picture in video/image encoding and/or decoding.

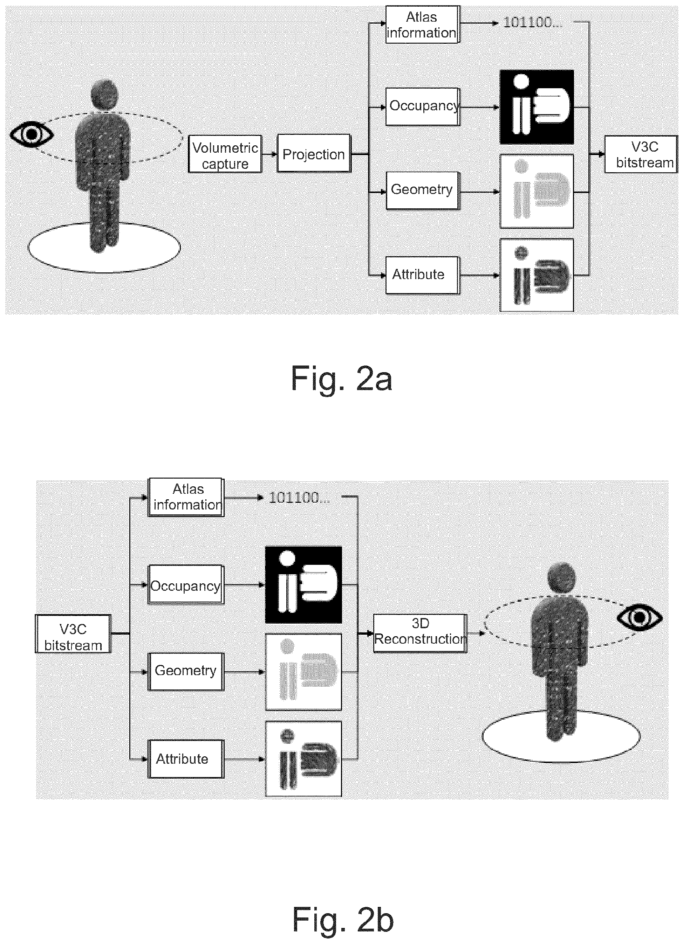

Figures 2a and 2b illustrate an overview of exemplified compression/ decompression processes. The processes may be applied, for example, in MPEG visual volumetric video-based coding (V3C), defined currently in ISO/IEC DIS 23090-5: "Visual Volumetric Video-based Coding and Video-based Point Cloud Compression", 2nd Edition.

V3C specification enables the encoding and decoding processes of a variety of volumetric media by using video and image coding technologies. This is achieved through first a conversion of such media from their corresponding 3D representation to multiple 2D representations, also referred to as V3C components, before coding such information. Such representations may include occupancy, geometry, and attribute components. The occupancy component can inform a V3C decoding and/or rendering system of which samples in the 2D components are associated with data in the final 3D representation. The geometry component contains information about the precise location of 3D data in space, while attribute components can provide additional properties, e.g. texture or material information, of such 3D data. An example of volumetric media conversion at an encoder is shown in Figure 2a and an example of a 3D reconstruction at a decoder is shown in Figure 2b.

There are alternatives to capture and represent a volumetric frame. The format used to capture and represent the volumetric frame depends on the process to be performed on it, and the target application using the volumetric frame. As a first example a volumetric frame can be represented as a point cloud. A point cloud is a set of unstructured points in 3D space, where each point is characterized by its position in a 3D coordinate system (e.g., Euclidean), and some corresponding attributes (e.g., color information provided as RGBA value, or normal vectors). As a second example, a volumetric frame can be represented as images, with or without depth, captured from multiple viewpoints in 3D space. In other words, the volumetric video can be represented by one or more view frames (where a view is a projection of a volumetric scene on to a plane (the camera plane) using a real or virtual camera with known/computed extrinsic and intrinsic). Each view may be represented by a number of components (e.g., geometry, color, transparency, and occupancy picture), which may be part of the geometry picture or represented separately. As a third example, a volumetric frame can be represented as a mesh. Mesh is a collection of points, called vertices, and connectivity information between vertices, called edges. Vertices along with edges form faces. The combination of vertices, edges and faces can uniquely approximate shapes of objects.

Depending on the capture, a volumetric frame can provide viewers the ability to navigate a scene with six degrees of freedom, i.e., both translational and rotational movement of their viewing pose (which includes yaw, pitch, and roll). The data to be coded for a volumetric frame can also be significant, as a volumetric frame can contain many numbers of objects, and the positioning and movement of these objects in the scene can result in many dis-occluded regions. Furthermore, the interaction of the light and materials in objects and surfaces in a volumetric frame can generate complex light fields that can produce texture variations for even a slight change of pose.

A sequence of volumetric frames is a volumetric video. Due to large amount of information, storage and transmission of a volumetric video requires compression. A way to compress a volumetric frame can be to project the 3D geometry and related attributes into a collection of 2D images along with additional associated metadata. The projected 2D images can then be coded using 2D video and image coding technologies, for example ISO/IEC 14496-10 (H.264/AVC) and ISO/IEC 23008-2 (H.265/HEVC). The metadata can be coded with technologies specified in specification such as ISO/IEC 23090-5. The coded images and the associated metadata can be stored or transmitted to a client that can decode and render the 3D volumetric frame.

In the following, a short reference of ISO/IEC 23090-5 Visual Volumetric Video-based Coding (V3C) and Video-based Point Cloud Compression (V-PCC) 2nd Edition is given. ISO/IEC 23090-5 specifies the syntax, semantics, and process for coding volumetric video. The specified syntax is designed to be generic, so that it can be reused for a variety of applications. Point clouds, immersive video with depth, and mesh representations can all use ISO/IEC 23090-5 standard with extensions that deal with the specific nature of the final representation. The purpose of the specification is to define how to decode and interpret the associated data (for example atlas data in ISO/IEC 23090-5) which tells a renderer how to interpret 2D frames to reconstruct a volumetric frame.

Two applications of V3C (ISO/IEC 23090-5) have been defined, V-PCC (ISO/IEC 23090-5) and MPEG Immersive Video (MIV) (ISO/IEC 23090-12). MIV and V-PCC use a number of V3C syntax elements with a slightly modified semantics. An example on how the generic syntax element can be differently interpreted by the application is pdu_projection_id.

In case of V-PCC, the syntax element pdu_projection_id specifies the index of the projection plane for the patch. There can be 6 or 18 projection planes in V-PCC, and they are implicit, i.e., pre-determined.

In case of MIV, pdu_projection_id corresponds to a view ID, i.e., identifies which view the patch originated from. View IDs and their related information is explicitly provided in MIV view parameters list and may be tailored for each content.

MPEG 3DG (ISO SC29 WG7) group has started a work on a third application of V3C - the mesh compression. It is also envisaged that mesh coding will re-use V3C syntax as much as possible and can also slightly modify the semantics.

To differentiate between applications of V3C bitstream that allow a client to properly interpret the decoded data, V3C uses the ptl_profile_toolset_idc parameter.

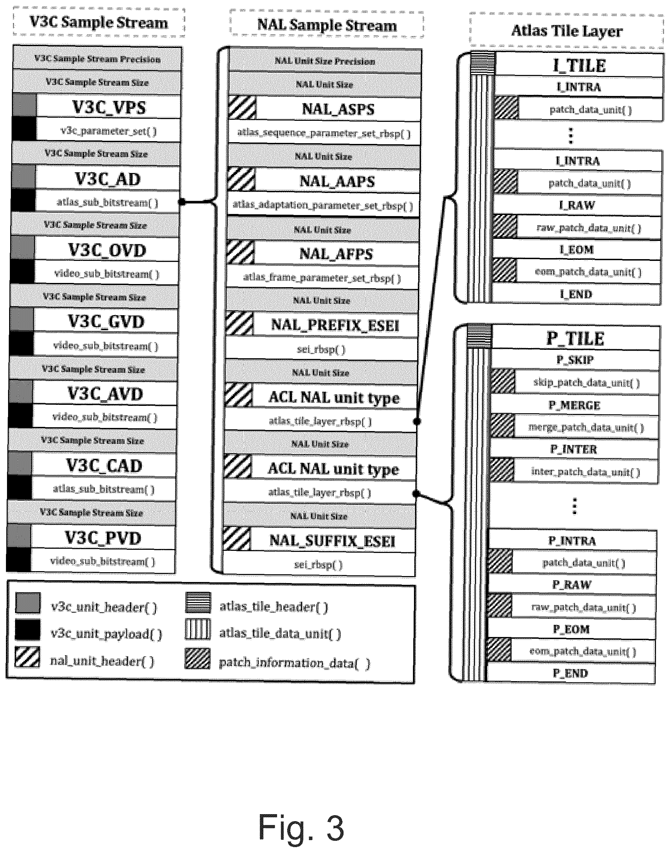

V3C bitstream is a sequence of bits that forms the representation of coded volumetric frames and the associated data making one or more coded V3C sequences (CVS). V3C bitstream is composed of V3C units that contain V3C video sub-bitstreams, V3C atlas sub-bitstreams, or V3C Parameter Set (VPS). Fig. 3 illustrates an example of VC3 bitstream. Video sub-bitstream and atlas sub-bitstreams can be referred to as V3C sub-bitstreams. Each V3C unit has a V3C unit header and a V3C unit payload. A V3C unit header in conjunction with VPS information identify which V3C sub-bitstream a V3C unit contains and how to interpret it.

V3C bitstream can be stored according to Annex C of ISO/IEC 23090-5, which specifies syntax and semantics of a sample stream format to be used by applications that deliver some or all of the V3C unit stream as an ordered stream of bytes or bits within which the locations of V3C unit boundaries need to be identifiable from patterns in the data.

A Real Time Transfer Protocol (RTP) is intended for an end-to-end, real-time transfer or streaming media and provides facilities for jitter compensation and detection of packet loss and out-of-order delivery. RTP allows data transfer to multiple destinations through IP multicast or to a specific destination through IP unicast. The majority of the RTP implementations are built on the User Datagram Protocol (UDP). Other transport protocols may also be utilized. RTP is used in together with other protocols such as H.323 and Real Time Streaming Protocol RTSP.

The RTP specification describes two protocols: RTP and RTCP. RTP is used for the transfer of multimedia data, and the RTCP is used to periodically send control information and QoS parameters.

RTP sessions may be initiated between client and server using a signalling protocol, such as H.323, the Session Initiation Protocol (SIP), or RTSP. These protocols may use the Session Description Protocol (RFC 8866) to specify the parameters for the sessions.

RTP is designed to carry a multitude of multimedia formats, which permits the development of new formats without revising the RTP standard. To this end, the information required by a specific application of the protocol is not included in the generic RTP header. For a class of applications (e.g., audio, video), an RTP profile may be defined. For a media format (e.g., a specific video coding format), an associated RTP payload format may be defined. Every instantiation of RTP in a particular application may require a profile and payload format specifications.

The profile defines the codecs used to encode the payload data and their mapping to payload format codecs in the protocol field Payload Type (PT) of the RTP header.

For example, RTP profile for audio and video conferences with minimal control is defined in RFC 3551. The profile defines a set of static payload type assignments, and a dynamic mechanism for mapping between a payload format, and a PT value using Session Description Protocol (SDP). The latter mechanism is used for newer video codec such as RTP payload format for H.264 Video defined in RFC 6184 or RTP Payload Format for High Efficiency Video Coding (HEVC) defined in RFC 7798.

An RTP session is established for each multimedia stream. Audio and video streams may use separate RTP sessions, enabling a receiver to selectively receive components of a particular stream. The RTP specification recommends even port number for RTP, and the use of the next odd port number of the associated RTCP session. A single port can be used for RTP and RTCP in applications that multiplex the protocols.

Each RTP stream consists of RTP packets, which in turn consist of RTP header and payload parts.

RTP packets are created at the application layer and handed to the transport layer for delivery. Each unit of RTP media data created by an application begins with the RTP packet header.

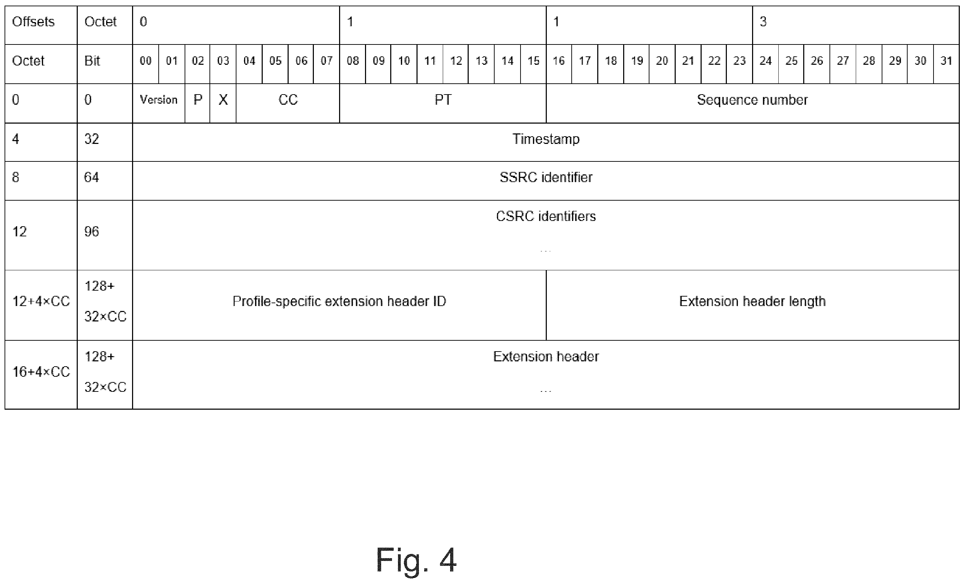

The RTP header has a minimum size of 12 bytes. After the header, optional header extensions may be present. This is followed by the RTP payload, the format of which is determined by the particular class of application. The fields in the header are as follows:
- Version: (2 bits) Indicates the version of the protocol.
- P (Padding): (1 bit) Used to indicate if there are extra padding bytes at the end of the RTP packet.
- X (Extension): (1 bit) Indicates the presence of an extension header between the header and payload data. The extension header is application or profile specific.
- CC (CSRC count): (4 bits) Contains the number of CSRC identifiers that follow the SSRC
- M (Marker): (1 bit) Signalling used at the application level in a profile-specific manner. If it is set, it means that the current data has some special relevance for the application.
- PT (Payload type): (7 bits) Indicates the format of the payload and thus determines its interpretation by the application.
- Sequence number: (16 bits) The sequence number is incremented for each RTP data packet sent and is to be used by the receiver to detect packet loss and to accommodate out-of-order delivery.
- Timestamp: (32 bits) Used by the receiver to play back the received samples at appropriate time and interval. When several media streams are present, the timestamps may be independent in each stream. The granularity of the timing is application specific. For example, video stream may use a 90 kHz clock. The clock granularity is one of the details that is specified in the RTP profile for an application.
- SSRC: (32 bits) Synchronization source identifier uniquely identifies the source of the stream. The synchronization sources within the same RTP session will be unique.
- CSRC: (32 bits each) Contributing source IDs enumerate contributing sources to a stream which has been generated from multiple sources.
- Header extension: (optional, presence indicated by Extension field) The first 32-bit word contains a profile-specific identifier (16 bits) and a length specifier (16 bits) that indicates the length of the extension in 32-bit units, excluding the 32 bits of the extension header. The extension header data is shown in Figure 4.

The first two bytes of the payload of an RTP packet are commonly referred to as the payload header. The payload header consists of the same fields (F, NUT, NLI, and TID) as the NAL unit header as defined in 23090-5, irrespective of the type of the payload structure. For convenience, the structure of RTP payload header is described below: 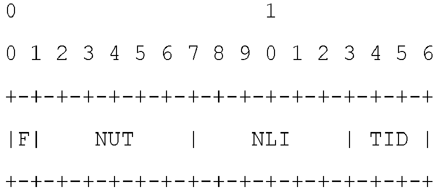 wherein:
- F: nal_forbidden_zero_bit as specified in ISO/IEC 23090-5 MUST be equal to 0.
- NUT: nal_unit_type as specified in ISO/IEC 23090-5 defines the type of the RBSP data structure contained in the NAL unit. NUT value can carry other meaning depending on the RTP packet type.
- NLI: nal_layer_id as specified in ISO/IEC 23090-5 defines the identifier of the layer to which an ACL NAL unit belongs or the identifier of a layer to which a non-ACL NAL unit applies.
- TID: nal_temporal_id_plus1 minus 1 as specified in ISO/IEC 23090-5 defines a temporal identifier for the NAL unit. The value of nal_temporal_id_plus1 MUST NOT be equal to 0.
- The remainder of the data in RTP payload contains the information as defined by the RTP header.

In this disclosure, the Session Description Protocol (SDP) is used as an example of a session specific file format. SDP is a format for describing multimedia communication sessions for the purposes of announcement and invitation. Its predominant use is in support of conversational and streaming media applications. SDP does not deliver any media streams itself, but it is used between endpoints for negotiation of network metrics, media types, and other associated properties. The set of properties and parameters is called a session profile. SDP is extensible for the support of new media types and formats.

The Session Description Protocol describes a session as a group of fields in a text-based format, one field per line. The form of each field is as follows:
<character>=<value><CR><LF>
where <character> is a single case-sensitive character and <value> is structured text in a format that depends on the character. Values may be UTF-8 encoded. Whitespace is not allowed immediately to either side of the equal sign.

Session descriptions consist of three sections: session, timing, and media descriptions. Each description may contain multiple timing and media descriptions. Names are only unique within the associated syntactic construct.

Fields appear in the order, shown below; optional fields are marked with an asterisk:
v= (protocol version number, currently only 0)
o= (originator and session identifier: username, id, version number, network address)
s= (session name: mandatory with at least one UTF-8-encoded character)
i=* (session title or short information)
u=* (URI of description)
e=* (zero or more email address with optional name of contacts)
p=* (zero or more phone number with optional name of contacts)
c=* (connection information-not required if included in all media)
b=* (zero or more bandwidth information lines)
One or more time descriptions ("t=" and "r=" lines; see below)
z=* (time zone adjustments)
k=* (encryption key)
a=* (zero or more session attribute lines)
Zero or more Media descriptions (each one starting by an
"m=" line; see below)

Time description (mandatory):
t= (time the session is active)
r=* (zero or more repeat times)

Media description (optional):
m= (media name and transport address)
i=* (media title or information field)
c=* (connection information - optional if included at session level)
b=* (zero or more bandwidth information lines)
k=* (encryption key)
a=* (zero or more media attribute lines - overriding the Session attribute lines)

Below is a sample session description from RFC 4566. This session is originated by the user "jdoe" at IPv4 address 10.47.16.5. Its name is "SDP Seminar" and extended session information ("A Seminar on the session description protocol") is included along with a link for additional information and an email address to contact the responsible party, Jane Doe. This session is specified to last two hours using NTP timestamps, with a connection address (which indicates the address clients must connect to or - when a multicast address is provided, as it is here - subscribe to) specified as IPv4 224.2.17.12 with a TTL of 127. Recipients of this session description are instructed to only receive media. Two media descriptions are provided, both using RTP Audio Video Profile. The first is an audio stream on port 49170 using RTP/AVP payload type 0 (defined by RFC 3551 as PCMU), and the second is a video stream on port 51372 using RTP/AVP payload type 99 (defined as "dynamic"). Finally, an attribute is included which maps RTP/AVP payload type 99 to format h263-1998 with a 90 kHz clock rate. RTCP ports for the audio and video streams of 49171 and 51373, respectively, are implied.
v=0
o=jdoe 2890844526 2890842807 IN IP4 10.47.16.5
s=SDP Seminar
i=A Seminar on the session description protocol
u=http://www.example.com/seminars/sdp.pdf
e=j.doe@example.com (Jane Doe)
c=IN IP4 224.2.17.12/127
t=2873397496 2873404696
a=recvonly
m=audio 49170 RTP/AVP 0
m=video 51372 RTP/AVP 99
a=rtpmap:99 h263-1998/90000

SDP uses attributes to extend the core protocol. Attributes can appear within the Session or Media sections and are scoped accordingly as session-level or media-level. New attributes can be added to the standard through registration with IANA. A media description may contain any number of "a=" lines (attribute-fields) that are media description specific. Session-level attributes convey additional information that applies to the session as a whole rather than to individual media descriptions.

Attributes are either properties or values:
a=<attribute-name>
a=<attribute-name>:<attribute-value>

Examples of attributes defined in RFC8866 are "rtpmap" and "fmpt".

"rtpmap" attribute maps from an RTP payload type number (as used in an "m=" line) to an encoding name denoting the payload format to be used. It also provides information on the clock rate and encoding parameters. Up to one "a=rtpmap:" attribute can be defined for each media format specified. This can be the following:
m=audio 49230 RTP/AVP 96 97 98
a=rtpmap:96 L8/8000
a=rtpmap:97 L16/8000
a=rtpmap:98 L16/11025/2

In the example above, the media types are "audio/L8" and "audio/L16".

Parameters added to an "a=rtpmap:" attribute may only be those required for a session directory to make the choice of appropriate media to participate in a session. Codec-specific parameters may be added in other attributes, for example, "fmtp".

"fmtp" attribute allows parameters that are specific to a particular format to be conveyed in a way that SDP does not have to understand them. The format can be one of the formats specified for the media. Format-specific parameters, semicolon separated, may be any set of parameters required to be conveyed by SDP and given unchanged to the media tool that will use this format. At most one instance of this attribute is allowed for each format. An example is:
a=fmtp:96 profile-level-id=42e016;max-mbps=108000;max-fs=3600

For example, RFC7798 defines the following sprop-vps, sprop-sps, sprop-pps, profile-space, profile-id, tier-flag, level-id, interop-constraints, profile-compatibility-indicator, sprop-sub-layer-id, recv-sub-layer-id, max-recv-level-id, tx-mode, max-lsr, max-lps, max-cpb, max-dpb, max-br, max-tr, max-tc, max-fps, sprop-max-don-diff, sprop-depack-buf-nalus, sprop-depack-buf-bytes, depack-buf-cap, sprop-segmentation-id, sprop-spatial-segmentation-idc, dec-parallel-cap, and include-dph.

For providing synchronization between RTP sessions, RFC 7656 provides a taxonomy of semantics and mechanisms for Real-Time Transport Protocol. The document provides an overview of the synchronization methods and specifies the semantics of a synchronization context, which defines a requirement for a strong timing relationship between the media sources, typically requiring alignment of clock sources. Such a relationship can be identified in multiple ways, as listed below. A single media source can only belong to a single synchronization context, since it is assumed that a single media source can only have a single media clock and requiring alignment to several synchronization contexts (and thus reference clocks) will effectively merge those into a single synchronization context.

Various examples for identifying the timing relationship between the media sources are listed below.

RFC3550 describes inter-media synchronization between RTP sessions based on RTCP CNAME, RTP, and timestamps of a reference clock formatted using the Network Time Protocol (NTP) [RFC5905]. As indicated in [RFC7273], despite using NTP format timestamps, it is not required that the clock be synchronized to an NTP source.

Clock Source Signaling defined in RFC7273 provides a mechanism to signal the clock source in the Session Description Protocol (SDP), RFC4566, both for the reference clock as well as the media clock, thus allowing a synchronization context to be defined beyond the one defined by the usage of CNAME source descriptions.

Implicitly via RtcMediaStream, WebRTC defines RtcMediaStream with one or more RtcMediaStreamTracks. All tracks in a RtcMediaStream are intended to be synchronized when rendered, implying that they must be generated such that synchronization is possible.

Explicitly via SDP Mechanisms, the SDP Grouping Framework, RFC5888, defines an "m=" line (Section 4.2) grouping mechanism called Lip Synchronization (with LS identification-tag) for establishing the synchronization requirement across "m=" lines when they map to individual sources. Source-Specific Media Attributes in SDP, RFC5576, extends the above mechanism when multiple media sources are described by a single "m=" line.

As described above, V3C content can be encoded into a V3C bitstream and transmitted over multiple RTP sessions. For example, each video V3C component, each atlas V3C component and a common atlas V3C component can have their own RTP session.

The separate RTP sessions can be synchronized on the receiver using one of the existing methods described above. For example, based on RTCP CNAME, RTP, and timestamps of a reference clock formatted using the Network Time Protocol (NTP).

V3C bitstream has an implicit dependency between the V3C components to properly decode and render the V3C object. For example, video V3C components are useless in composition (reconstructing) process if the corresponding atlas V3C component is missing. Or in case of MIV, video V3C components and atlas V3C components are useless if the corresponding common atlas V3C component is missing.

In ISO/IEC 23090-5 the dependency between the video V3C components, atlas V3C components, and common atlas V3C component is not explicitly signalled, and it is assumed that the encoding application will ensure that such information is provided. For example, using appropriate decoding and composition timestamps (DTS/CTS) of V3C component tracks in ISOBMFF.

In RTP streaming scenario, an application can as well ensure that proper synchronization, i.e., timestamps, information is provided across RTP sessions.

However, in case of real-time transmission, a receiver should have a way of knowing if the packets across different RTP sessions create a valid combination and can be decoded and reconstructed together. A problem appears when the V3C components have different frame rates, and even more so if some of the frame rates are not constant during the session. In case of MIV, the update of common atlas data will be dictated by the camera movements in the capture system and should not be pre-determined at the beginning of the session.

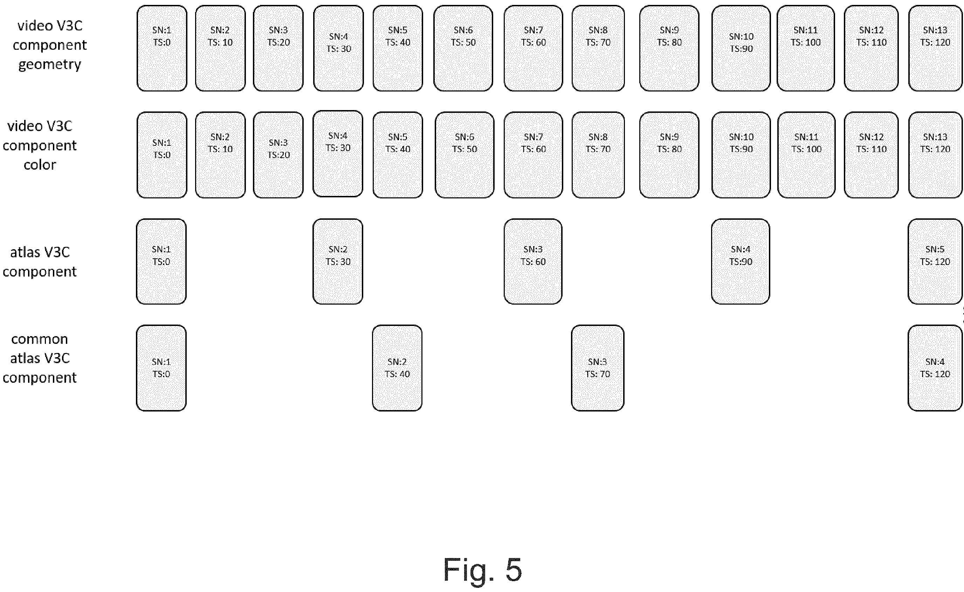

The problem is illustrated in an example of Figure 5, where a V3C object is transmitted over four RTP sessions. Each rectangle in Figure 5 represents an RTP packet with a session specific sequence number (SN) and timestamp (TS). The atlas V3C component sends packets on lower constant frequency than video V3C components. The common atlas V3C component sends packets at unspecified rate, which is dependent on the capture system.

A simple example of such capture system that would need to support such flexibility in terms of transmission rate of the packets is a system, where the camera locations are not fixed temporally. From time to time some cameras may be moving and thus information about the movement will need to be transmitted over the stream only periodically.

To ensure proper reconstruction on the receiver and enable timely error detection in a situation illustrated in Figure 5, a sender would have to determine a proper buffering time, which could be based on:
- V3C atlas data framerate, but due to the low frequency of atlas component packets, the rendering latency would increase which is not desirable in real-time communication.
- V3C common atlas session framerate, but this would require providing constrains on the capturing system and ensure predictability in the updates of common atlas V3C component data.
- V3C video framerate, but there would be no way of knowing if packets from lower framerate sessions are dropped and thus know, if the stream can be rendered.

In an ideal low-latency system, the buffering would be kept minimal, with ideally only a single or at most few packets per session in the buffer waiting for the next interval of packets to arrive. The timely error detection should occur at maximal framerate, whenever packets are received in any session. Unfortunately, the special nature of V3C bitstreams makes this kind of system challenging to construct especially when different components are streamed in their own sessions at different framerates.

In the following, an enhanced method for providing synchronization between separate, but mutually dependent RTP sessions will be described in more detail, in accordance with various embodiments.

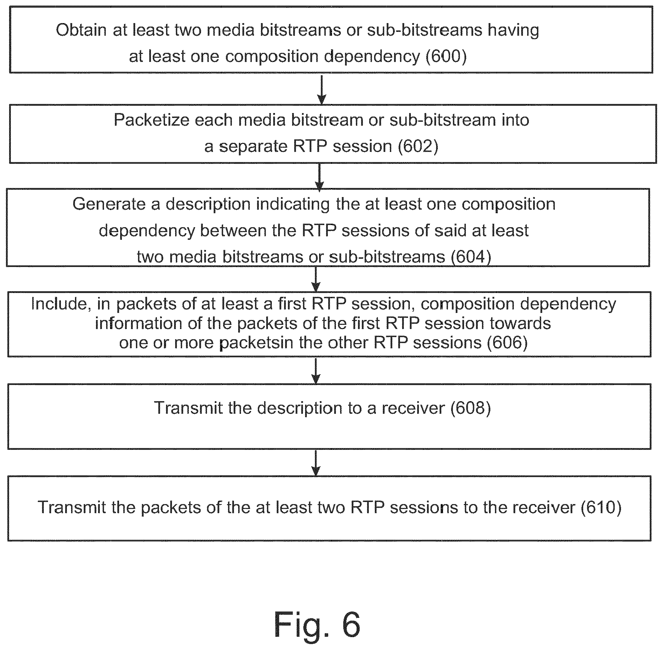

The method, which is disclosed in Figure 6, comprises obtaining (600) at least two media bitstreams or sub-bitstreams having at least one composition dependency; packetizing (602) each media bitstream or sub-bitstream into a separate RTP session; generating (604) a description indicating the at least one composition dependency between the RTP sessions of said at least two media bitstreams or sub-bitstreams; include (606), in packets of at least a first RTP session, composition dependency information of the packets of the first RTP session towards one or more packets in the other RTP sessions; transmit (608) the description to a receiver; and transmit (610) the packets of the at least two RTP sessions to the receiver.

Thus, the method enables to provide information regarding composition dependencies between packets of the different RTP sessions that allows a receiver to obtain sufficient information about the packets of the RTP sessions, whether they create a valid combination for reconstructing the whole content.

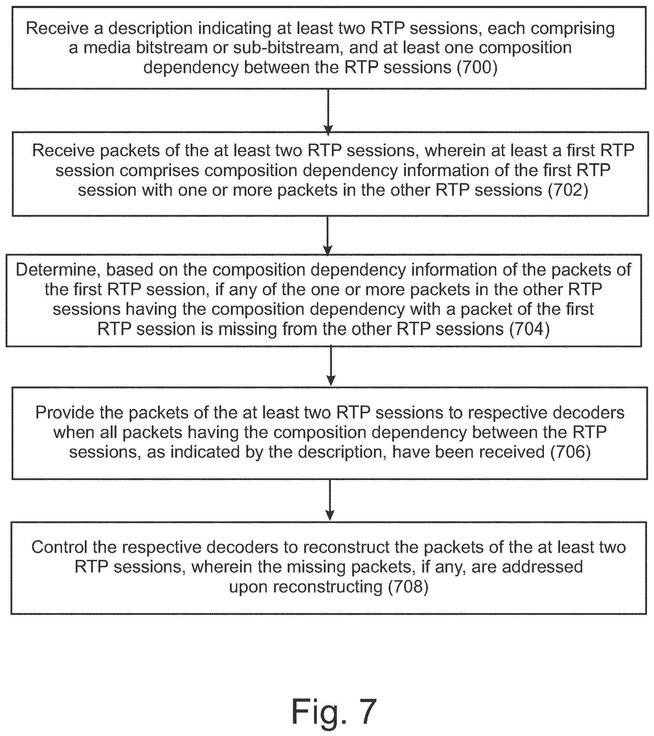

Another aspect relates to the operation of a receiver. Figure 7 shows an example of a method comprising receiving (700) a description indicating at least two RTP sessions, each comprising a media bitstream or sub-bitstream, and at least one composition dependency between the RTP sessions; receiving (702) packets of the at least two RTP sessions, wherein at least a first RTP session comprises composition dependency information of the packets of the first RTP session with one or more packets in the other RTP sessions; determining (704), based on the composition dependency information of the first RTP session, if any of the one or more packets in the other RTP sessions having the composition dependency with a packet of the first RTP session is missing from the other RTP sessions; providing (706) the packets of the at least two RTP sessions to respective decoders when all packets having the composition dependency between the RTP sessions, as indicated by the description, have been received; and controlling (708) the respective decoders to reconstruct the packets of the at least two RTP sessions, wherein the missing packets, if any, are addressed upon reconstructing.

The method and some of the embodiments herein below refer to reconstructing. It needs to be understood that the reconstructing may comprise one or more of the following: decoding data, such as image data, from a bitstream, decapsulating the bitstream from a container file and/or from packet(s) or stream(s) of a communication protocol, and parsing a content description of the bitstream.

Thus, the receiver determines, based on the composition dependency information provided in or along at least one RTP session, if any of the packets in the other RTP sessions having the composition dependency with at least one packet of the first RTP session is missing. After having received all packets having the composition dependency between the RTP sessions, as indicated by the description, the packets of the RTP sessions are provided to their respective decoders. The operation of the decoders may then be controlled according to the determined information about possibly missing packets having the composition dependency with at least one packet of another RTP session.

According to an embodiment, each of the at least two RTP sessions comprise a media sub-bitstream associated with a visual volumetric video-based coding (V3C) bitstream, wherein at least one of the media sub-bitstreams is an atlas sub-bitstream.

Thus, the method can be applied to V3C bitstreams, wherein the composition dependencies to at least one atlas sub-bitstream, such as atlas V3C component and/or common atlas V3C component, are provided.

According to an embodiment, in response to determining that at least one packet of an RTP session having the composition dependency with at least one packet of the atlas sub-bitstream is missing, the method comprises re-rendering a frame comprised by a previous packet of the atlas sub-bitstream, and notifying a sender that said at least one packet is missing.

Hence, in a case of missing a packet having the composition dependency with at least one packet of the atlas sub-bitstream, i.e. a packet of the atlas sub-bitstream, as such, or a packet of another V3C sub-bitstream providing the composition dependency information to at least one packet of the atlas sub-bitstream, the respective decoder of the atlas sub-bitstream may to reconstruct the frame from the previous packet of the atlas sub-bitstream again and use it in place of the frame of the missing packet. The sender may further be acknowledged about the missing packet, whereupon a re-transmission of the packet may be arranged, if considered necessary.

According to an embodiment, said description is a Session Description Protocol (SDP) file. Thus, the properties of SDP providing the session profile for announcements and invitations for streaming media applications may be utilised herein.

According to an embodiment, a signalling of the composition dependency between packets of the at least two RTP sessions is configured to be carried out by at least one syntax element included in media level of the SDP file.

Accordingly, new identifier may be added to be used with an "extmap" attribute in media level of the SDP:
urn:ietf:params:rtp-hdrext:v3c:cs-cd
where cs-cd refers to Cross-Session Composition Dependency.

Table 1 shows an example of including the new identifier into the RTP header extension syntax structure.

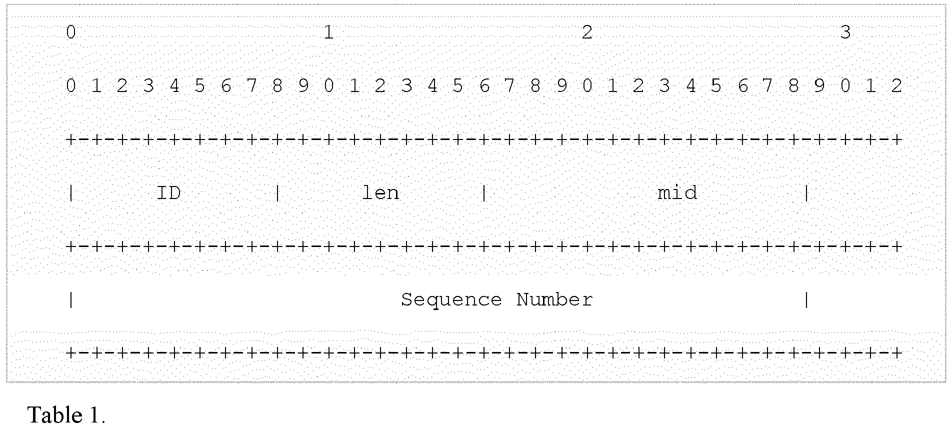

In the above syntax, the 8-bit ID is the local identifier and length field, which both are defined RFC 5285. The RTP header extension contains additional fields mid and Sequence Number. mid: it is a unique Media Identification provided through SDP or signalled in RTP packet header using header extensions mechanism such as urn:ietf:params:rtp-hdrext:sdes:mid. Sequence Number: a sequence number of an RTP packet within the RTP session identified by mid.

According to an embodiment, the timestamp is used as an indication of a packet in RTP session identified by said identifier. Thus, instead of Sequence Number, the timestamp could be used an indication of the packet in RTP session identified by mid.

According to an embodiment, RTP header extensions with explicit identifier values are carried in the RTP session identified by said identifier. Therein, instead of an RTP Sequence Number, the header extension depicted above carries an explicit identifier value that the packet depends on.

According to an embodiment, the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

An example SDP file describing the RTP session carrying V3C components including the RTP header extensions (mid and cs-cd) that allows to signal the cross-session dependencies is disclosed below. In the example, video components (mid:0 and mid:1) and atlas component (mid:2) have cross-session composition dependency to another session as indicated by the mid value in the RTP packet header extension, whereas the common atlas component (mid:3) does have any dependency.
v=0
o=svcsrv 289083124 289083124 IN IP4 host.example.com
s=V3C SIGNALING
t=0 0
c=IN IP4 192.0.2.1/127
a=group:BUNDLE 1 2 3 4
m=video 40000 RTP/AVP 96
a=rtpmap:96 H264/90000
a=extmap:1 urn:ietf:params:rtp-hdrext:sdes:mid
a=extmap:2 urn:ietf:params:rtp-hdrext:v3c:cs-cd
a=mid:0
m=video 40000 RTP/AVP 96
a=rtpmap:96 H264/90000
a=extmap:1 urn:ietf:params:rtp-hdrext:sdes:mid
a=extmap:2 urn:ietf:params:rtp-hdrext:v3c:cs-cd
a=mid:1
m=video 40000 RTP/AVP 96
a=rtpmap:96 ATLAS/90000
a=extmap:1 urn:ietf:params:rtp-hdrext:sdes:mid
a=extmap:2 urn:ietf:params:rtp-hdrext:v3c:cs-cd
a=mid:2
m=video 40000 RTP/AVP 96
a=rtpmap:96 ATLAS/90000
a=extmap:1 urn:ietf:params:rtp-hdrext:sdes:mid
a=mid:3

According to an embodiment, at least one RTP session having the composition dependency with RTP session comprising the atlas sub-bitstream has a lower transmission frequency of the RTP packets than RTP session comprising the atlas sub-bitstream, wherein the method comprises duplicating the RTP packets of said at least one RTP session in the atlas sub-bitstream in corresponding locations lacking an RTP packet.

Thus, sessions with a composition dependency can duplicate RTP packets, when the session to which the composition dependency is established sends packets at lower framerate.

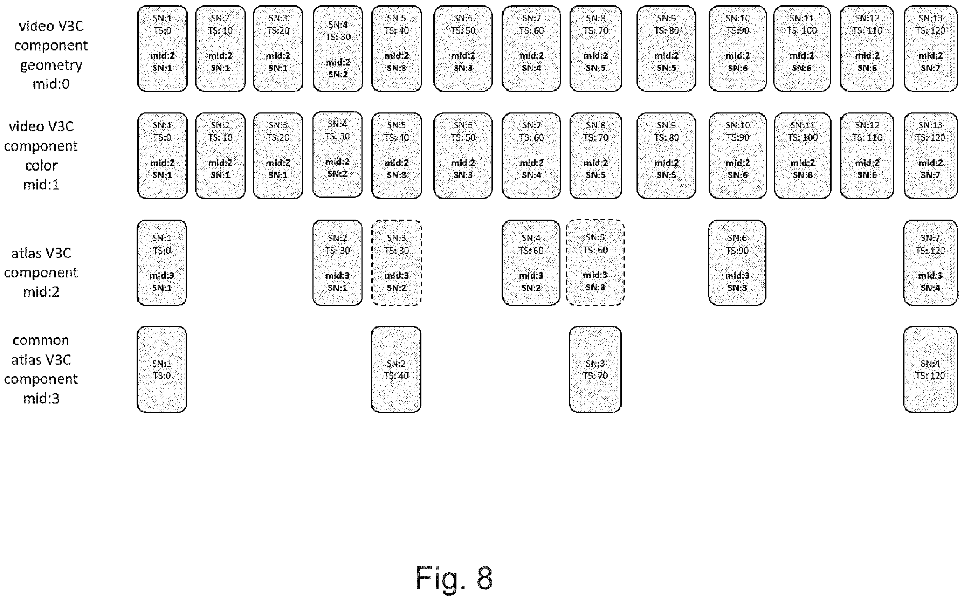

Figure 8 shows an example for using the header extensions for signalling the dependency between the packets in RTP sessions. In the example, a video V3C geometry component (mid:0) and a video V3C color component (mid:1) have cross-session composition dependency to an atlas V3C component (mid:2), as indicated by the mid value (mid2) in their RTP packets. The atlas V3C component (mid:2), in turn, has cross-session composition dependency to a common atlas V3C component (mid:3), as indicated by the mid value (mid3) in the RTP packets.

Figure 8 also discloses an example of the embodiment, where the packets of the common atlas V3C component (sending packets at varying and lower frequency than the atlas V3C component) are duplicated in the atlas V3C component in those locations, where the atlas V3C component has no packet (indicated by the dotted line). The sequence numbers (SN) of the packets of the atlas V3C component are adjusted accordingly. The video V3C geometry component (mid:0) and the video V3C color component (mid:1) obtain the necessary information from the common atlas V3C component (mid:3) through the adjusted atlas V3C component (mid:2). Thus, proper alignment of timing and signalling information is also ensured.

According to an embodiment, at least one RTP session has the composition dependency with a plurality of other RTP sessions.

An example SDP file describing said embodiment is disclosed below. In the example, video components (mid:0 and mid:1) have cross-session composition dependency to both the atlas component (mid:2) and the common atlas component (mid:3). The atlas component session and the common atlas component session do not have composition dependencies and rely on the video component sessions to signal all composition dependencies.
v=0
o=svcsrv 289083124 289083124 IN IP4 host.example.com
s=V3C SIGNALING
t=0 0
c=IN IP4 192.0.2.1/127
a=group:BUNDLE 0 1 2 3
m=video 40000 RTP/AVP 96
a=rtpmap:96 H264/90000
a=extmap:1 urn:ietf:params:rtp-hdrext:sdes:mid
a=extmap:2 urn:ietf:params:rtp-hdrext:v3c:cs-cd
a=extmap:3 urn:ietf:params:rtp-hdrext:v3c:cs-cd
a=mid:0
m=video 40002 RTP/AVP 96
a=rtpmap:96 H264/90000
a=extmap:1 urn:ietf:params:rtp-hdrext:sdes:mid
a=extmap:2 urn:ietf:params:rtp-hdrext:v3c:cs-cd
a=extmap:3 urn:ietf:params:rtp-hdrext:v3c:cs-cd
a=mid:1
m=video 40004 RTP/AVP 96
a=rtpmap:96 ATLAS/90000
a=extmap:1 urn:ietf:params:rtp-hdrext:sdes:mid
a=mid:2
m=video 40006 RTP/AVP 96
a=rtpmap:96 ATLAS/90000
a=extmap:1 urn:ietf:params:rtp-hdrext:sdes:mid
a=mid:3

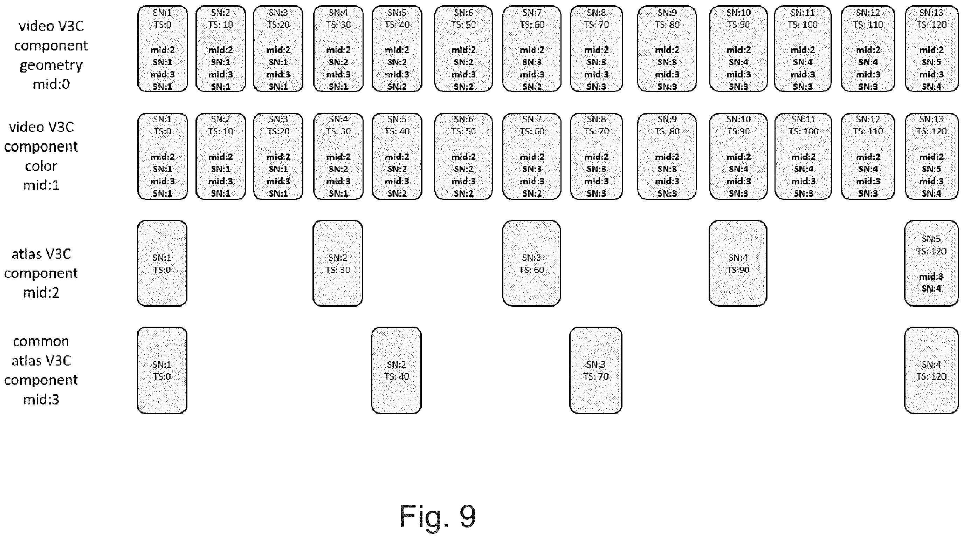

This is also illustrated in an example of Figure 9, where in comparison to Figure 8, the video V3C geometry component (mid:0) and the video V3C color component (mid:1) have cross-session composition dependency to both the atlas V3C component (mid:2) and the common atlas V3C component (mid:3). Thus, the duplications of the RTP packets from the common atlas V3C component to the atlas V3C component is not needed, but the two video component sessions provide the necessary signalling to all composition dependencies.

It is noted that depending on the framerate of the individual sessions and the size of the replicated RTP packets, either of the embodiments depicted in Figures 8 and 9 may be preferred over the other.

According to an embodiment, a group of packets have the same timestamp, wherein the identifier is placed only in the first packet of said group of packets. Thus, the RTP header extension identified by urn:ietf:params:rtp-hdrext:v3c:cs-cd is placed only in the first packet of the group of packet with the same timestamp. For example, when group of RTP packets each carrying NAL units that constitute to one video frame, only the first packet is provided with the identifier.

The embodiments relating to the encoding aspects may be implemented in an apparatus comprising: means for obtaining at least two media bitstreams or sub-bitstreams having at least one composition dependency; means for packetizing each media bitstream or sub-bitstream into a separate RTP session; means for generating a description indicating the at least one composition dependency between the RTP sessions of said at least two media bitstreams or sub-bitstreams; means for including, in packets of at least a first RTP session, composition dependency information of the packets of the first RTP session towards one or more packets in the other RTP sessions; means for transmitting the description to a receiver; and means for transmitting the packets of the at least two RTP sessions to the receiver.

According to an embodiment, said description is a Session Description Protocol (SDP) file.

According to an embodiment, the apparatus comprises means for carrying out a signalling of the composition dependency between packets of the at least two RTP sessions by at least one syntax element included in media level of the SDP file.

According to an embodiment, the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

According to an embodiment, the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

According to an embodiment, at least one RTP session has the composition dependency with a plurality of other RTP sessions.

According to an embodiment, said means for packetizing is configured to, in response to at least a first RTP session having said composition dependency with a second RTP session comprises a bitstream or a sub-bitstream having a lower transmission frequency of the RTP packets than a bitstream or a sub-bitstream of the second RTP session, duplicate the RTP packets of the bitstream or the sub-bitstream of said at least first RTP session in the bitstream or the sub-bitstream of said second RTP session in corresponding locations lacking an RTP packet.

According to an embodiment, each of the at least two RTP sessions comprise a media sub-bitstream associated with a visual volumetric video-based coding (V3C) bitstream, wherein at least one of the media sub-bitstreams is an atlas sub-bitstream.

The embodiments relating to the encoding aspects may likewise be implemented in an apparatus comprising at least one processor and at least one memory, said at least one memory stored with computer program code thereon, the at least one memory and the computer program code configured to, with the at least one processor, cause the apparatus at least to perform: obtain at least two media bitstreams or sub-bitstreams having at least one composition dependency; packetizing each media bitstream or sub-bitstream into a separate RTP session; generate a description indicating the at least one composition dependency between the RTP sessions of said at least two media bitstreams or sub-bitstreams; include, in packets of at least a first RTP session, composition dependency information of the packets of the first RTP session towards one or more packets in the other RTP sessions; transmit the description to a receiver; and transmit the packets of the at least two RTP sessions to the receiver.

The embodiments relating to the decoding aspects may be implemented in an apparatus comprising means for receiving a description indicating at least two RTP sessions, each comprising a media bitstream or sub-bitstream, and at least one composition dependency between the RTP sessions; means for receiving packets of the at least two RTP sessions, wherein at least a first RTP session comprises composition dependency information of the packets of the first RTP session with one or more packets in the other RTP sessions; means for determining, based on the composition dependency information of the first RTP session, if any of the one or more packets in the other RTP sessions having the composition dependency with a packet of the first RTP session is missing from the other RTP sessions; means for providing the packets of the at least two RTP sessions to respective decoders when all packets having the composition dependency between the RTP sessions, as indicated by the description, have been received; and means for controlling the respective decoders to reconstruct the packets of the at least two RTP sessions, wherein the missing packets, if any, are addressed upon reconstructing.

According to an embodiment, said description is a Session Description Protocol (SDP) file.

According to an embodiment, the apparatus comprises means for determining a signalling of the composition dependency between packets of the at least two RTP sessions from at least one syntax element included in media level of the SDP file.

According to an embodiment, the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

According to an embodiment, the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

According to an embodiment, each of the at least two RTP sessions comprise a media sub-bitstream associated with a visual volumetric video-based coding (V3C) bitstream, wherein at least one of the media sub-bitstreams is an atlas sub-bitstream.

According to an embodiment, the apparatus comprises means for re-rendering, responsive to determining that at least one packet of an RTP session having the composition dependency with at least one packet of the atlas sub-bitstream is missing, a frame comprised by a previous packet of the atlas sub-bitstream; and means for notifying a sender that said at least one packet is missing.

According to an embodiment, at least one RTP session having the composition dependency with RTP session comprising the atlas sub-bitstream has a lower transmission frequency of the RTP packets than RTP session comprising the atlas sub-bitstream, wherein the apparatus comprises means for duplicating the RTP packets of said at least one RTP session in the atlas sub-bitstream in corresponding locations lacking an RTP packet.

The embodiments relating to the decoding aspects may likewise be implemented in an apparatus comprising at least one processor and at least one memory, said at least one memory stored with computer program code thereon, the at least one memory and the computer program code configured to, with the at least one processor, cause the apparatus at least to perform: receive a description indicating at least two RTP sessions, each comprising a media bitstream or sub-bitstream, and at least one composition dependency between the RTP sessions; receive packets of the at least two RTP sessions, wherein at least a first RTP session comprises composition dependency information of the packets of the first RTP session with one or more packets in the other RTP sessions; determine, based on the composition dependency information of the first RTP session, if any of the one or more packets in the other RTP sessions having the composition dependency with a packet of the first RTP session is missing from the other RTP sessions; provide the packets of the at least two RTP sessions to respective decoders when all packets having the composition dependency between the RTP sessions, as indicated by the description, have been received; and control the respective decoders to reconstruct the packets of the at least two RTP sessions, wherein the missing packets, if any, are addressed upon reconstructing.

Such apparatuses may comprise e.g. the functional units disclosed in any of the Figures 1a, 1b, 2a and 2b for implementing the embodiments.

In the above, some embodiments have been described with reference to encoding. It needs to be understood that said encoding may comprise one or more of the following: encoding source image data into a bitstream, encapsulating the encoded bitstream in a container file and/or in packet(s) or stream(s) of a communication protocol, and announcing or describing the bitstream in a content description, such as the Media Presentation Description (MPD) of ISO/IEC 23009-1 (known as MPEG-DASH) or the IETF Session Description Protocol (SDP). Similarly, some embodiments have been described with reference to decoding. It needs to be understood that said decoding may comprise one or more of the following: decoding image data from a bitstream, decapsulating the bitstream from a container file and/or from packet(s) or stream(s) of a communication protocol, and parsing a content description of the bitstream,

In the above, where the example embodiments have been described with reference to an encoder or an encoding method, it needs to be understood that the resulting bitstream and the decoder or the decoding method may have corresponding elements in them. Likewise, where the example embodiments have been described with reference to a decoder, it needs to be understood that the encoder may have structure and/or computer program for generating the bitstream to be decoded by the decoder.

In general, the various embodiments of the invention may be implemented in hardware or special purpose circuits or any combination thereof. While various aspects of the invention may be illustrated and described as block diagrams or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended examples. However, all such and similar modifications of the teachings of this invention will still fall within the scope of this invention.

## Claims

1. An apparatus comprising:
means for obtaining at least two media bitstreams or sub-bitstreams having at least one composition dependency;
means for packetizing each media bitstream or sub-bitstream into a separate RTP session;
means for generating a description indicating the at least one composition dependency between the RTP sessions of said at least two media bitstreams or sub-bitstreams;
means for including in packets of at least a first RTP session, composition dependency information of the packets of the first RTP session towards one or more packets in the other RTP sessions;
means for transmitting the description to a receiver;
means for transmitting the packets of the at least two RTP sessions to the receiver.

2. The apparatus according to claim 1, wherein said description is a Session Description Protocol (SDP) file.

3. The apparatus according to claim 2, comprising:
means for carrying out a signalling of the composition dependency between packets of the at least two RTP sessions by at least one syntax element included in media level of the SDP file.

4. The apparatus according to claim 3, wherein the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

5. The apparatus according to claim 4, wherein the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

6. The apparatus according to any preceding claim, wherein at least one RTP session has the composition dependency with a plurality of other RTP sessions.

7. The apparatus according to claim 6, wherein said means for packetizing is configured to, in response to at least a first RTP session having said composition dependency with a second RTP session comprises a bitstream or a sub-bitstream having a lower transmission frequency of the RTP packets than a bitstream or a sub-bitstream of the second RTP session, duplicate the RTP packets of the bitstream or the sub-bitstream of said at least first RTP session in the bitstream or the sub-bitstream of said second RTP session in corresponding locations lacking an RTP packet.

8. The apparatus according to any preceding claim, wherein each of the at least two RTP sessions comprise a media sub-bitstream associated with a visual volumetric video-based coding (V3C) bitstream, wherein at least one of the media sub-bitstreams is an atlas sub-bitstream.

9. A method comprising:
obtaining at least two media bitstreams or sub-bitstreams having at least one composition dependency;
packetizing each media bitstream or sub-bitstream into a separate RTP session;
generating a description indicating the at least one composition dependency between the RTP sessions of said at least two media bitstreams or sub-bitstreams;
including, in packets of at least a first RTP session, composition dependency information of the packets of the first RTP session towards one or more packets in the other RTP sessions;
transmitting the description to a receiver;
transmitting the packets of the at least two RTP to the receiver.

10. An apparatus comprising:
means for receiving a description indicating at least two RTP sessions, each comprising a media bitstream or sub-bitstream, and at least one composition dependency between the RTP sessions;
means for receiving packets of the at least two RTP sessions, wherein at least a first RTP session comprises composition dependency information of the packets of the first RTP session with one or more packets in the other RTP sessions;
means for determining, based on the composition dependency information of the first RTP session, if any of the one or more packets in the other RTP sessions having the composition dependency with a packet of the first RTP session is missing from the other RTP sessions;
means for providing the packets of the at least two RTP sessions to respective decoders when all packets having the composition dependency between the RTP sessions, as indicated by the description, have been received; and
means for controlling the respective decoders to reconstruct the packets of the at least two RTP sessions, wherein the missing packets, if any, are addressed upon reconstructing.

11. The apparatus according to claim 10, wherein said description is a Session Description Protocol (SDP) file.

12. The apparatus according to claim 11, comprising:
means for determining a signalling of the composition dependency between packets of the at least two RTP sessions from at least one syntax element included in media level of the SDP file.

13. The apparatus according to claim 12, wherein the at least one syntax element comprises an identifier of the RTP session comprising said media bitstream or sub-bitstream and one or more of the following:
- a sequence number of an RTP packet within the RTP session identified by said identifier;
- a timestamp of an RTP packet within the RTP session identified by said identifier;
- an explicit identifier of an RTP packet within the RTP session identified by said identifier.

14. The apparatus according to claim 13, wherein the composition dependency information in a packet of the RTP session comprises a media identifier of a dependent RTP session and one or more of the following:
- a sequence number of a dependent RTP packet in the dependent RTP session;
- a timestamp of the dependent RTP packet in the dependent RTP session;
- an explicit identifier of the dependent RTP packet in the dependent RTP session.

15. The apparatus according to any of claims 10 - 14, wherein each of the at least two RTP sessions comprise a media sub-bitstream associated with a visual volumetric video-based coding (V3C) bitstream, wherein at least one of the media sub-bitstreams is an atlas sub-bitstream.

16. The apparatus according to claim 15, comprising
means for re-rendering, responsive to determining that at least one packet of an RTP session having the composition dependency with at least one packet of the atlas sub-bitstream is missing, a frame comprised by a previous packet of the atlas sub-bitstream; and
means for notifying a sender that said at least one packet is missing.

17. The apparatus according to claim 15 or 16, wherein at least one RTP session having the composition dependency with RTP session comprising the atlas sub-bitstream has a lower transmission frequency of the RTP packets than RTP session comprising the atlas sub-bitstream, wherein the apparatus comprises
means for duplicating the RTP packets of said at least one RTP session in the atlas sub-bitstream in corresponding locations lacking an RTP packet.

18. A method comprising:
receiving a description indicating at least two RTP sessions, each comprising a media bitstream or sub-bitstream, and at least one composition dependency between the RTP sessions;
receiving packets of the at least two RTP sessions, wherein at least a first RTP session comprises composition dependency information of the packets of the first RTP session with one or more packets in the other RTP sessions;
determining, based on the composition dependency information of the first RTP session, if any of the one or more packets in the other RTP sessions having the composition dependency with a packet of the first RTP session is missing from the other RTP sessions;
providing the packets of the at least two RTP sessions to respective decoders when all packets having the composition dependency between the RTP sessions, as indicated by the description, have been received; and
controlling the respective decoders to reconstruct the packets of the at least two RTP sessions, wherein the missing packets, if any, are addressed upon reconstructing.
